# EUROPÄISCHE PATENTSCHRIFT

(11) **EP 3 483 043 B1**
(45) Veröffentlichungstag und Bekanntmachung des Hinweises auf die Patenterteilung: **14.10.2020**
(21) Anmeldenummer: 18203499.1
(22) Anmeldetag: 30.10.2018
(51) Int. Cl.: B62D 25/18, B62D 25/16

(54) **KOTFLÜGEL MIT SPRITZLAPPEN ZUR MONTAGE AN FAHRZEUGEN, BEVORZUGT LASTKRAFTWAGEN**
MUDGUARDS WITH FLAPS FOR MOUNTING ON VEHICLES, PREFERABLY TRUCKS
GARDE-BOUE À BAVETTES DESTINÉE AU MONTAGE SUR DES VÉHICULES, DE PRÉFÉRENCE DES POIDS LOURDS

(30) Priorität: 08.11.2017 DE 102017126119
(43) Veröffentlichungstag der Anmeldung: 15.05.2019
(73) Patentinhaber: Franz Sauermann GmbH & Co. KG, 86529 Schrobenhausen (DE)
(72) Erfinder: Sauermann, Franz, 86529 Schrobenhausen (DE)
(74) Vertreter: TBK

(56) Entgegenhaltungen:
- EP-A1- 0 109 577
- CN-U- 205 661 548
- DE-A1- 2 931 304
- JP-A- 2001 213 358
- US-A1- 2006 208 476

## Beschreibung

Größere Fahrzeuge sind üblicherweise mit Kotflügeln ausgestattet, die an ihrem unteren Ende einen Spritzlappen aufweisen, um das Abspritzen von Wasser von den Rädern auf den nachfolgenden Verkehr zu vermeiden. Üblicherweise sind derartige Spritzlappen auf einfache Weise mittels Schrauben mit dem Kotflügel verbunden. Hierzu sind am Spritzlappen sowie am Kotflügel korrespondierende Löcher vorgesehen, durch die Gewindeschrauben gesteckt werden, die dann auf der anderen Seite mittels Muttern gesichert werden. Um seine Funktion auch bei höheren Fahrgeschwindigkeiten zu erfüllen, muss der Spritzlappen eine gewisse Steifigkeit aufweisen, um zu vermeiden, dass dieser über das zulässige Maß durch den Fahrtwind nach hinten abgelenkt wird und somit nicht mehr weit genug nach unten reicht, um abspritzendes Wasser abzufangen.

Das Dokument DE 29 31 304 A1 offenbart einen Kotflügel mit Spritzlappen zur Montage an Fahrzeugen, bevorzugt Lastkraftwagen. Der Kotflügel ist in seinem unteren Bereich mit einem Spritzlappen versehen, der mittels eines Montagemittels gemäß einem Ausführungsbeispiel einem Sicherungsbolzen mit dem Kotflügel verbunden wird.

Das Dokument EP 0 109 577 A1 offenbart einen dreiteiligen Kotflügel bei dem die hintere Kotflügelschale in ihrem oberen Bereich zwei beabstandete Abschnitte aufweist, die einen Schlitz ausbilden. Diese Schale kann jedoch nicht als Spritzlappen angesehen werden, weil die Schale einen Teil des Kotflügels bildet und keinen an diesem angehängten biegsamen Spritzlappen darstellt.

Aus dem Dokument US 2006/208476 A1 ist ein Spritzlappen mit einer zweiteiligen Befestigungsvorrichtung bekannt, welche zwei beabstandete Abschnitte aufweist, die einen Schlitz ausbilden. Dieser Spritzlappen wird aus einer aufwendigen Konstruktion an einem hinteren Träger des Fahrzeugs montiert. Er weist keine Verbindung mit dem unteren Bereich eines Kotflügels auf.

Aufgabe der vorliegenden Erfindung ist es, einen Kotflügel mit Spritzlappen zu schaffen, bei dem der Spritzlappen einfach und schnell zu montieren ist und bei dem ein Auslenken oder Auswehen über das zulässige Maß sicher verhindert wird. Diese Aufgabe wird durch die Merkmale des Anspruchs 1 gelöst.

Gemäß der Erfindung weist der Spritzlappen in seinem oberen Bereich, an dem er mit dem Kotflügel verbunden wird, zumindest zwei beabstandete Abschnitte auf, die einen Schlitz ausbilden mittels dem der Spritzlappen auf den unteren Bereich des Kotflügels aufsteckbar ist. Dabei ist grundsätzlich auch eine Konstruktion möglich, bei der der Schlitz durch zwei beabstandete Abschnitte des Kotflügels gebildet wird und der Spritzlappen mit seinem oberen Abschnitt in diesen Schlitz eingesteckt wird. Bei hinreichender Einstecktiefe ergibt sich auch bei dieser Konstruktion eine ausreichende Steifigkeit. Um dieses Aufstecken zu ermöglichen, muss der Schlitz eine Größe haben, die zumindest der Dicke des entsprechenden unteren Bereichs des Kotflügels, auf den der Spritzlappen aufgesteckt werden soll, entspricht. Der Schlitz kann jedoch auch größer ausgebildet sein, ist jedoch optimal so bemessen, dass der Spritzlappen auf den Kotflügel aufgesteckt werden kann und durch den Reibschluss zwischen dem unteren Bereich des Kotflügels und dem genannten Schlitz der Spritzlappen gehalten wird, sodass zum Anbringen der Montagemittel ein weiteres manuelles Halten des Spritzlappens nicht erforderlich ist. Zweckmäßig erstreckt sich der Schlitz über die Breite des Spritzlappens, wobei mit Breite die Erstreckung in Fahrzeugbreite gemeint ist. Der Schlitz kann als durchgehender Schlitz zwischen zwei beabstandeten Abschnitten ausgebildet sein oder auch als unterbrochener Schlitz, der mittels eines durchgehenden Abschnitts und mehreren laschenartigen Abschnitten ausgebildet ist, oder es können durch gegenüberliegende, unterbrochene, laschenartige Abschnitte auch mehrere Schlitze ausgebildet sein, die sich jedoch ebenfalls zweckmäßig über die Breite des Spritzlappens erstrecken.

Je größer die Erstreckung des Schlitzes ist, desto mehr Kontakt und damit Klemmfläche ergibt sich, um den Spritzlappen so auf den Kotflügel aufstecken zu können, dass dieser nicht weiter manuell gehalten werden muss. Des Weiteren erhöht sich dadurch die Stabilität des Spritzlappens, was im Weiteren detailliert erläutert wird. Es ist jedoch nicht zwingend erforderlich, den Schlitz über die gesamte Breite des Spritzlappens auszuführen und auch einzelne gegenüberliegende Laschen, die über die Breite des Spritzlappens verteilt sind, beispielsweise vier unterbrochene gegenüberliegende Laschen, können die Aufgabe erfüllen.

Eine besonders einfache Montage des Spritzlappens ergibt sich, wenn auf einer Seite des Spritzlappens, bevorzugt auf der Innenseite, die zum Fahrzeugrad hinweist, eine Montagemittelaufnahme ausgebildet ist. Beispielsweise können als Montagemittel Schrauben mit einem selbstschneidenden Gewinde eingesetzt werden und als Montagemittelaufnahme ein Kunststoffelement, in das die Schraube eindrehbar ist. Zweckmäßig ist dieses Kunststoffelement einstückig mit dem Spritzlappen in dem inneren beabstandeten Abschnitt, der den genannten Schlitz ausbildet, vorgesehen. An der gegenüberliegenden äußeren Seite ist in dem entsprechenden Abschnitt des Spritzlappens dann lediglich ein Loch ausgebildet, das mit einem in der aufgesteckten Montageposition am Kotflügel vorgesehenen Loch fluchtet, so dass der Spritzlappen lediglich aufgesteckt werden muss und dann die Schraube durch den Kotflügel hindurch in das rückseitig am Spritzlappen vorgesehene Kunststoffelement eingedreht wird. Bei einer solchen Halterung ist ein Hantieren mit Muttern und dergleichen nicht erforderlich. Gemäß einer bevorzugten Ausführungsform ist der außenliegende, den Schlitz ausbildende Abschnitt des Spritzlappens durchgehend über die Breite des Spritzlappens ausgebildet und der korrespondierende innenliegende Abschnitt unterbrochen durch mehrere Laschen, die das Kunststoffelement zur Aufnahme der Montagemittel tragen.

Bei der konkreten, noch detailliert dargestellten Ausführungsform werden als Montagemittel Schrauben mit selbstschneidendem Gewinde verwendet, die in Kunststoffelemente eingedreht werden, die eine Bohrung aufweisen, die einen geringeren Durchmesser hat als der Außendurchmesser des Gewindes. Das Kunststoffelement kann sich kegelförmig nach oben bzw. außen verjüngen, wobei die Spitze abgeflacht sein kann. Es sind aber auch andere Gestaltungen, wie zylinderförmige oder halbkugelförmige Gestaltungen, möglich. Zur Erhöhung der Stabilität können an dem Kunststoffelement Verstärkungsrippen vorgesehen sein. Diese erstrecken sich vom Kunststoffelement zweckmäßig radial nach außen und können unterschiedlich gestaltet sein. Wichtig ist, dass diese ebenfalls einstückig mit dem Spritzlappen ausgebildet sind, um so die Stabilität zu erhöhen.

Es können aber auch andere Montagemittel zum Einsatz kommen, beispielsweise können Steckelemente zum Einsatz kommen, die nach dem Durchstecken von außen durch den Kotflügel an dem inneren Abschnitt des Spritzlappens verrasten. Hierzu können übliche Rastmechanismen vorgesehen sein, die lösbar oder auch unlösbar gestaltet sein können, da üblicherweise ein Spritzlappen erst nach Verschleiß erneuert wird, und daher bei der Demontage auch beschädigt werden kann. Der auf den Spritzlappen wirkende Fahrtwind versucht das freie, also untere, Ende des Spritzlappens, das nicht fixiert ist, nach hinten auszuwehen. Die Biegung des Spritzlappens erfolgt dann um den oberen Bereich, der mit dem Kotflügel verbunden ist. Bei der beschriebenen Konstruktionen wird eben dieser Bereich durch das Vorsehen von zumindest zwei beabstandeten Abschnitten, die durch Montagemittel fest miteinander verbunden werden, erheblich ausgesteift. Es ergibt sich somit eine Konstruktion, die zum Einen einfach zu Montieren ist und zum Anderen auch bei überschaubarem Materialeinsatz eine ausgesprochen steife Konstruktion darstellt, die ein Auswehen oder Auslenken des Spritzlappens über das zulässige Maß wirksam verhindert.

Weiterhin detailliert beschrieben im konkreten Ausführungsbeispiel ist die Montagemittelaufnahme in dem radseitigen inneren Abschnitt des Spritzlappens, wobei das Montagemittel, in diesem Fall eine Schraube, einfach von außen eingebracht werden kann. Grundsätzlich ist jedoch auch eine umgedrehte Anordnung möglich, bei der die Montagemittelaufnahme an dem außenliegenden Abschnitt des Spritzlappens vorgesehen ist und das Montagemittel von innen, also von der Radseite aus, eingebracht wird. Insbesondere wenn das Montagemittel keine Schraube ist, sondern ein Einsteckstift, ist dies ohne Weiteres und ohne größere Nachteile möglich. Um die Festigkeit, insbesondere die Steifigkeit, des oberen Bereichs des Spritzlappens zu erhöhen, ist die beschriebene Konstruktion ausgesprochen vorteilhaft. Durch die Verbindung des den Schlitz ausbildenden Abschnitts des Spritzlappens mittels Montagemittel mit dem dazwischen befindlichen Teil des Kotflügels wird eine steife Konstruktion geschaffen. Grundsätzlich ist aber auch eine Konstruktion denkbar, bei der die erforderliche Festigkeit bzw. Steifigkeit bereits durch den Schlitz bzw. das Aufstecken des Spritzlappens auf das untere Ende des Kotflügels erzielt wird und die Montagemittel im Wesentlichen lediglich dazu dienen, den Spritzlappen in der gewünschten Position zu sichern und eventuell einen geringen Festigkeitsbeitrag zu leisten. In diesem Fall kann die Montagemittelaufnahme auch am Kotflügel selbst vorgesehen sein, sodass nur einer der Abschnitte des Spritzlappens vom Montagemittel durchdrungen wird, das dann am Kotflügel mittels Eintreten oder Einstecken gesichert wird. Ebenso, wenn die beabstandeten Abschnitte am Kotflügel ausgebildet und der Spritzlappen eingesteckt wird.

Um das Montagemittel einbringen zu können, müssen die Bohrungen am Spritzlappen und am Kotflügel fluchten. Um die Montage weiter zu vereinfachen, können am Kotflügel und/oder Spritzlappen Führungen bzw. Führungsflächen vorgesehen sein, die ein Aufstecken nur in einer definierten Position, nämlich der endgültigen Montageposition, ermöglichen. Hierzu können Vor- oder Rücksprünge an den Teilen vorgesehen sein. Es können auch Seitenflächen beispielsweise laschenartiger Vorsprünge oder beabstandete Abschnitte zur Führung verwendet werden, indem diese mit entsprechend angeordneten Seitenflächen des anderen Teils zusammenwirken. Auch die Endposition kann durch entsprechende Führungen begrenzt werden, sodass beim Aufstecken des Spritzlappens nicht weiter auf ein Fluchten der Bohrungen geachtet werden muss, sondern dieses Fluchten sich von alleine beim vervollständigten Aufstecken des Spritzlappens ergibt wodurch die Montage nochmals vereinfacht wird.

Die Erfindung wird näher anhand zweier bevorzugter Ausführungsbeispiele erläutert. Es zeigt:
Fig. 1 den erfindungsgemäßen Kotflügel mit Spritzlappen von der Seite,
Fig. 2 den erfindungsgemäßen Kotflügel mit Spritzlappen von hinten,
Fig. 3 den erfindungsgemäßen Kotflügel mit Spritzlappen von innen,
Fig. 4 den erfindungsgemäßen Kotflügel mit Spritzlappen in einem Teilschnitt,
Fig. 5 einen Teil der Befestigung des Spritzlappens am Kotflügel bei einer zweiten, leicht abgewandelten Ausführungsform.

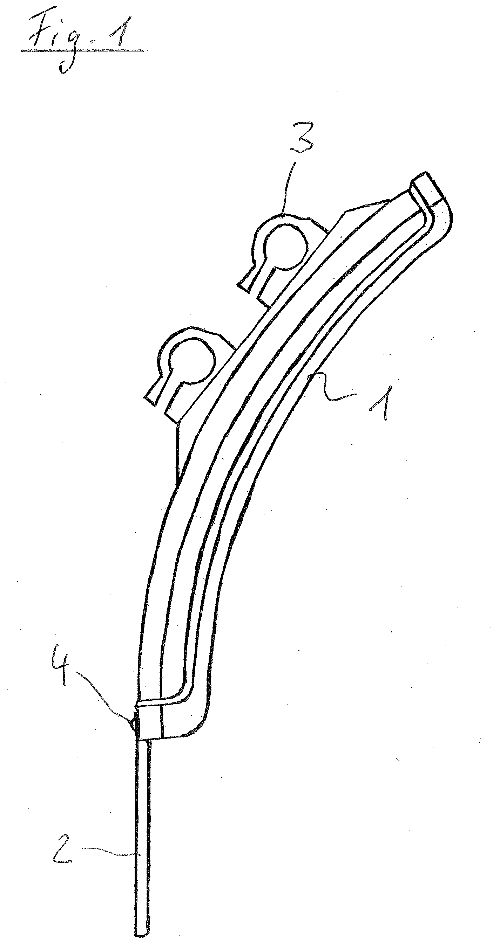

In Fig. 1 ist der Kotflügel 1 mit montierten Spritzlappen 2 von der Seite dargestellt. Der Kotflügel 1 wird über Befestigungsschellen 3 am Fahrzeug montiert. Um ein Abspritzen von Wasser oder anderen Flüssigkeiten vom Rad auf den dahinter fahrenden Verkehr zu vermeiden, ist am unteren Ende des Kotflügels 1 ein Spritzlappen 2 angebracht. Die Befestigung erfolgt über Schrauben 4, die von außen durch den Spritzlappen 2 hindurch mit dem Kotflügel 1 und einem rückwertigen Teil des Spritzlappens 2 verschraubt werden. Dies wird detailliert anhand der weiteren Figuren erläutert.

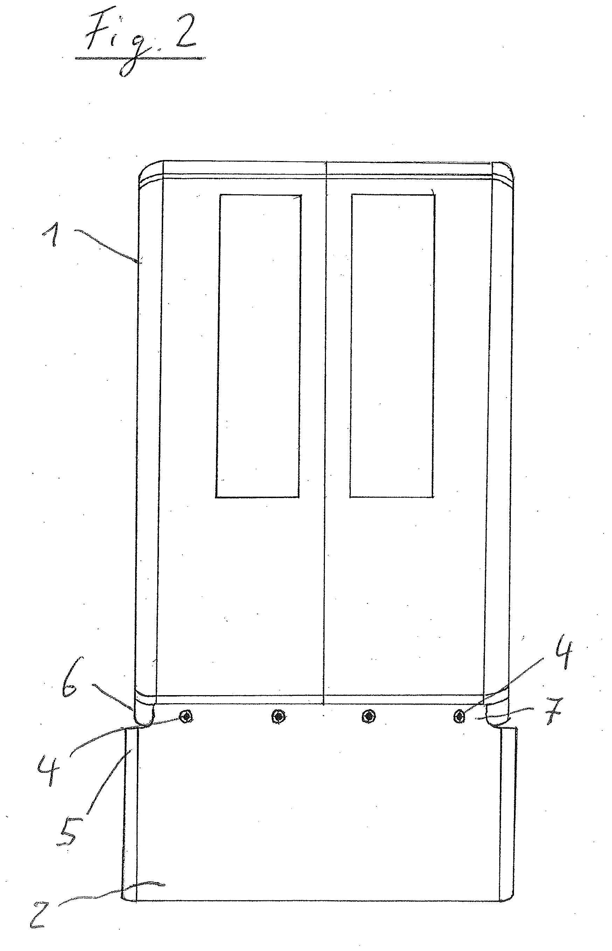

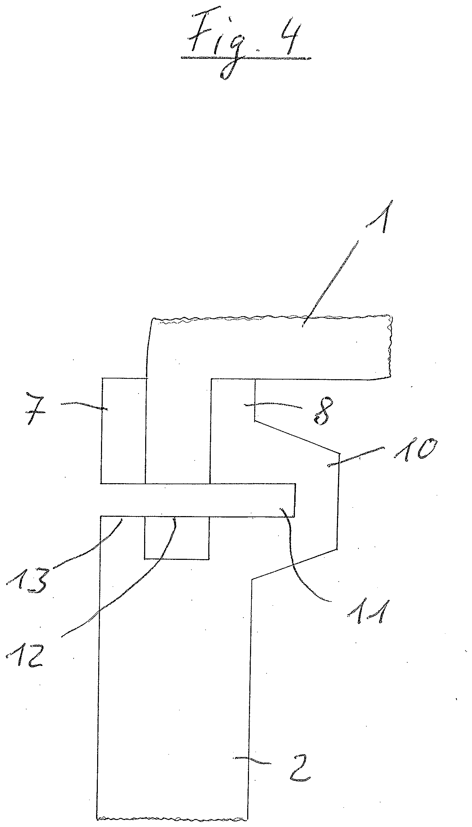

Fig. 2 zeigt den Kotflügel 1 mit Spritzlappen 2 von hinten. Gut zu sehen ist, dass der Spritzlappen einen unteren Bereich 5 und einen oberen Bereich 6 aufweist. Der obere Bereich 6 überlappt mit dem unteren Bereich des Kotflügels 1 und dient zur Befestigung des Spritzlappens 2 am Kotflügel 1. Hierzu sind beim konkreten Ausführungsbeispiel vier Schrauben 4 vorgesehen. Der obere Bereich 6 des Spritzlappens 2 weist zwei beabstandete Abschnitte 7, 8 auf, die den unteren Abschnitt 9 des Kotflügels 1 umgreifen und ein Aufstecken des Spritzlappens 2 auf den Kotflügel 1 ermöglichen, wie dies gut aus dem Schnitt in Fig. 4 zu sehen ist. In Fig. 4 ist der auf den Kotflügel aufgesteckte Spritzlappen 2 zu sehen, wobei die Schrauben 4 jedoch noch nicht eingedreht sind.

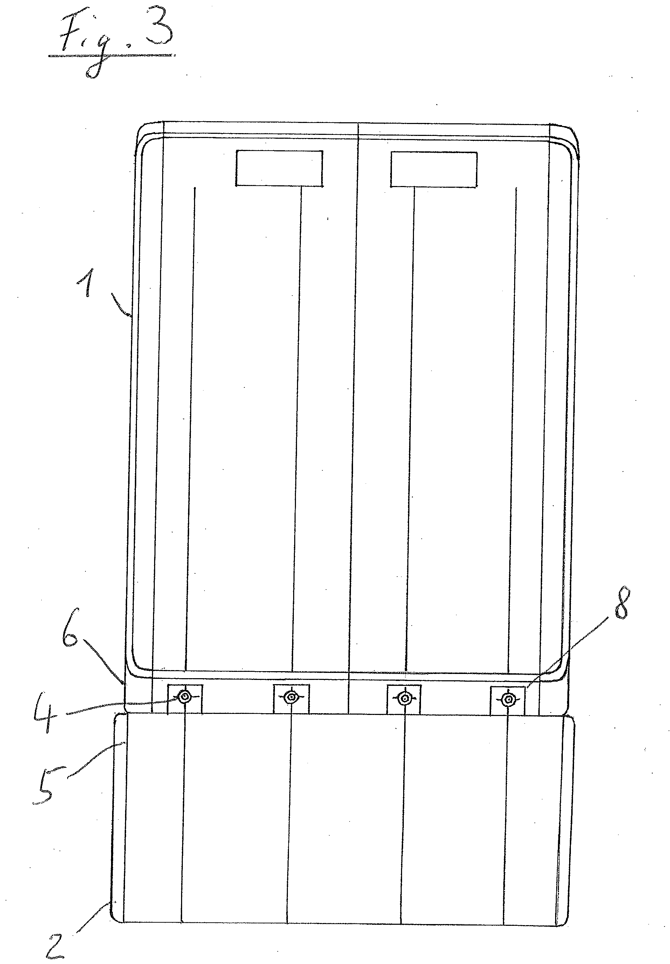

Wie aus Fig. 3 ersichtlich, ist der innere Abschnitt 8 des Spritzlappens im Gegensatz zum äußeren Abschnitt 7 nicht durchgehend ausgebildet, sondern wird durch vier laschenartige hervorstehende Bereiche an der Innenseite des Spritzlappens 2 ausgebildet. Diese laschenartigen Bereiche werden seitlich durch vorstehende Elemente am Kotflügel 1 geführt, sodass ein Aufstecken des Spritzlappens 2 auf den Kotflügel 1 nur in einer genau definierten Position, die der endgültigen Montageposition entspricht, möglich ist. Der Spritzlappen 2 muss daher bei der Montage lediglich geführt durch die genannten Wandlungen soweit wie möglich auf den Kotflügel 1 aufgesteckt werden und befindet sich dann in der endgültigen Montageposition, in der er durch die genannten Schrauben 4 gesichert wird. Eine einfache Montage wird dabei durch Kunststoffelemente 10 ermöglicht, die am inneren Abschnitt 8 des Spritzlappens 2 vorgesehen sind und in ihrem Inneren eine Bohrung 11 aufweisen, deren Durchmesser geringer ist als der Außendurchmesser der einzudrehenden Schraube 4. Diese Kunststoffelemente 10 sind beim konkreten Ausführungsbeispiel in Form abgeflachter Kegel ausgebildet, deren breite Basis am inneren Abschnitt 8 vorgesehen ist, so dass sich der Kegel mit der abgeflachten Spitze nach innen Richtung Rad erstreckt. Korrespondierend zur Bohrung 11 ist im unteren Abschnitt 9 des Kotflügels 1 und im äußeren Abschnitt 7 des Spritzlappens 2 eine korrespondierende Bohrung 12, 13 vorgesehen. Bei diesem Ausführungsbeispiel weisen die Bohrungen 11, 12 und 13 denselben Durchmesser auf. Beim Eindrehen der Schraube 4, deren Außendurchmesser größer ist als der Bohrungsdurchmesser, gräbt sich das Gewinde der Schraube 4 daher in den äußeren Abschnitt 7 des Spritzlappens, den unteren Abschnitt 9 des Kotflügels 1 und dann des Kunststoffelements 10. Auf diese Weise wird eine leicht herzustellende sichere Verbindung von Spritzlappen 2 und Kotflügel 1 gewährleistet.

Die Bohrungen 12 und 13 können jedoch auch größer ausfallen, beispielsweise den Durchmesser des Außengewindes der Schraube 4 aufweisen oder sogar geringfügig größer, sodass die Schraube 4 bei der Montage durch den äußeren Abschnitt 7 des Spritzlappens und den unteren Abschnitt 9 des Kotflügels hindurchgesteckt werden kann und dann mit dem Gewinde lediglich in das Kunststoffelement 10 eingedreht wird. Hierdurch ergibt sich eine nochmals vereinfachte Montage bei noch ausreichenden Befestigungskräften.

Wie gut aus Fig. 4 zu sehen ist, ergibt sich im unteren Bereich des Kotflügels 1 und im oberen Bereich des Spritzlappens 2 ein stabiler Verbund aus den zwei beabstandeten Abschnitten 7 und 8 des Spritzlappens 2 und dem unteren Abschnitt 9 des Kotflügels. Dieser Verbund weist eine hohe Steifigkeit auf, wodurch verhindert wird, dass der Spritzlappen durch den Fahrtwind um seine Befestigung am Kotflügel 1 herum unzulässig weit ausgelenkt wird.

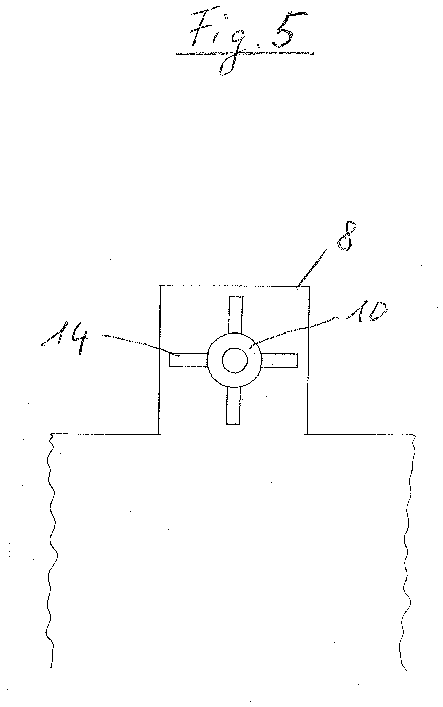

Fig. 5 beschreibt eine leicht abgewandelte Ausführungsform, bei der das Kunststoffelement 10 ebenfalls als abgestumpfter Kegel ausgebildet ist, jedoch mit vier radial nach außen verlaufenen Versteifungsrippen 14 versehen ist. Fig. 5 zeigt diese Gestaltung in der Draufsicht.

## Patentansprüche

1. Kotflügel mit Spritzlappen (2) zur Montage an Fahrzeugen, bevorzugt Lastkraftwagen, der in seinem unteren Bereich (9) mit einem Spritzlappen (2) versehen ist, der mittels eines Montagemittels (4) mit dem Kotflügel (1) verbunden wird,
**dadurch gekennzeichnet, dass**
der Spritzlappen (2) in seinem oberen Bereich (6) mindestens zwei beabstandete Abschnitte (7, 8) aufweist, die einen Schlitz ausbilden, der auf die Dicke des unteren Bereichs (9) des Kotflügels (1) abgestimmt ist, um auf diesen aufsteckbar zu sein,
wobei eine Verbindung von Kotflügel (1) und Spritzlappen (2) mittels Montagemittel (4) erfolgt, die den Spritzlappen (2) und den Kotflügel (1) durchdringen und von einer Montagemittelaufnahme (10) bevorzugt am Spritzlappen (2) aufgenommen werden.

2. Kotflügel nach Anspruch 1, **dadurch gekennzeichnet, dass** eine Montagemittelaufnahme (10) an den inneren Abschnitt (8), des Spritzlappens (2) ausgebildet ist, der auf den Kotflügel (1) aufsteckbar ist.

3. Kotflügel nach Anspruch 1, **dadurch gekennzeichnet, dass** eine Montagemittelaufnahme (10) im unteren Bereich des Kotflügels (1), auf dem der Spritzlappen (2) aufsteckbar ist, ausgebildet ist.

4. Kotflügel nach einem der Ansprüche 1 bis 3, **dadurch gekennzeichnet, dass** das Montagemittel (4) eine Schraube ist, und die Montagemittelaufnahme (10) ein Kunststoffelement ist, in das die Schraube (4) eindrehbar ist.

5. Kotflügel nach Anspruch 4, **dadurch gekennzeichnet, dass** das Kunststoffelement (10) eine Bohrung (11) aufweist, die einen geringeren Durchmesser hat als der Außendurchmesser der Schraube (4).

6. Kotflügel nach Anspruch 4 oder 5, **dadurch gekennzeichnet, dass** das Kunststoffelement (10) eine Kegelform aufweist, wobei die Bohrung (11) von der Basis zur bevorzugt abgeflachten Spitze verläuft, ohne die Spitze zu durchdringen.

7. Kotflügel nach einem der Ansprüche 4 bis 6, **dadurch gekennzeichnet, dass** das Kunststoffelement (10) Verstärkungsrippen (14) aufweist, die von diesem radial nach außen weisen.

8. Kotflügel nach einem der Ansprüche 4 bis 7, **dadurch gekennzeichnet, dass** das Kunststoffelement (10) einstückig mit dem Spritzlappen (2) oder dem Kotflügel (1) ausgebildet ist.

9. Kotflügel nach einem der Ansprüche 1 bis 8, **dadurch gekennzeichnet, dass** die beabstandeten Abschnitte (7, 8) des Spritzlappens (2) oder des Kotflügels (1) als sich gegenüberliegende Laschen ausgebildet sind.

10. Kotflügel nach einem der Ansprüche 1 bis 8, **dadurch gekennzeichnet, dass** sich die beabstandeten Abschnitte (7, 8) des Spritzlappens (2) oder des Kotflügels (1) über die Breite des Kotflügels (1) erstrecken.

11. Kotflügel nach einem der Ansprüche 1 bis 8, **dadurch gekennzeichnet, dass** sich der äußere beabstandete Abschnitt (7) des Spritzlappens (2) oder des Kotflügels (1) über die Breite des Kotflügels (1) erstreckt, wohingegen auf der Innenseite des Spritzlappens (2) oder des Kotflügels (1) mehrere innere Abschnitte (8) laschenartig ausgebildet sind.

12. Kotflügel nach einem der Ansprüche 1 bis 11, **dadurch gekennzeichnet, dass** im unteren Bereich (9) des Kotflügels (1) an der Position der Montagemittelaufnahme (10) Bohrungen (12) zur Aufnahme von Montagemitteln (4) vorgesehen sind.

13. Kotflügel nach einem der Ansprüche 1 bis 12, **dadurch gekennzeichnet, dass** der Kotflügel (1) im unteren Bereich (9) mit einer Führung versehen ist, die eine Aufnahme des Spritzlappens (2) nur in einer bestimmten Position zulässt.

14. Kotflügel nach Anspruch 13, **dadurch gekennzeichnet, dass** die Führung zumindest eine Seitenwand, einen Vorsprung oder einen Rücksprung aufweist, der mit zumindest einem der beabstandeten Abschnitte (7, 8) des Spritzlappens (2) oder des Kotflügels (1) zusammenwirkt.

## Claims

1. Mudguard with a splashguard flap (2) for assembly on vehicles, preferably commercial motor vehicles, said mudguard in the lower region (9) thereof being provided with a splashguard flap (2) which, by means of an assembly means (4), is connected to the mudguard (1),
**characterized in that**
the splashguard flap (2) in the upper region (6) thereof has at least two spaced-apart portions (7, 8) which configure a slot which is adapted to the thickness of the lower region (9) of the mudguard (1) so as to be able to be plug-fitted to the latter, wherein a connection between the mudguard (1) and the splashguard flap (2) is established by means of assembly means (4) which penetrate the splashguard flap (2) and the mudguard (1) and are received by an assembly means receptacle (10) preferably on the splashguard flap (2).

2. Mudguard according to Claim 1, **characterized in that** an assembly means receptacle (10) is configured onto the inner portion (8) of the splashguard flap (2) which is able to be plug-fitted to the mudguard (1).

3. Mudguard according to Claim 1, **characterized in that** an assembly means receptacle (10) is configured in the lower region of the mudguard (1) to which the splashguard flap (2) is able to be plug-fitted.

4. Mudguard according to one of Claims 1 to 3, **characterized in that** the assembly means (4) is a screw, and the assembly means receptacle (10) is a plastics material element into which the screw (4) is able to be driven.

5. Mudguard according to Claim 4, **characterized in that** the plastics material element (10) has a bore (11) which has a diameter which is smaller than the external diameter of the screw (4).

6. Mudguard according to Claim 4 or 5, **characterized in that** the plastics material element (10) has a conical shape, wherein the bore (11), without penetrating the tip, runs from the base to the preferably flattened tip.

7. Mudguard according to one of Claims 4 to 6, **characterized in that** the plastics material element (10) has reinforcement ribs (14) which point radially outwards from said plastics material element (10).

8. Mudguard according to one of Claims 4 to 7, **characterized in that** the plastics material element (10) is configured so as to be integral to the splashguard flap (2) or the mudguard (1).

9. Mudguard according to one of Claims 1 to 8, **characterized in that** the spaced-apart portions (7, 8) of the splashguard flap (2) or of the mudguard (1) are configured as mutually opposite lugs.

10. Mudguard according to one of Claims 1 to 8, **characterized in that** the spaced-apart portions (7, 8) of the splashguard flap (2) or of the mudguard (1) extend across the width of the mudguard (1).

11. Mudguard according to one of Claims 1 to 8, **characterized in that** the outer spaced-apart portion (7) of the splashguard flap (2) or of the mudguard (1) extends across the width of the mudguard (1), whereas a plurality of inner portions (8) on the internal side of the splashguard flap (2) or of the mudguard (1) are configured in the manner of lugs.

12. Mudguard according to one of Claims 1 to 11, **characterized in that** bores (12) for receiving assembly means (4) are provided at the position of the assembly means receptacle (10) in the lower region (9) of the mudguard (1).

13. Mudguard according to one of Claims 1 to 12, **characterized in that** the mudguard (1) in the lower region (9) is provided with a guide which permits the splashguard flap (2) to be received only in a specific position.

14. Mudguard according to Claim 13, **characterized in that** the guide has at least one lateral wall, one protrusion, or one recess, which interacts with at least one of the spaced-apart portions (7, 8) of the splashguard flap (2) or of the mudguard (1).

## Revendications

1. Garde-boue à bavette (2) destiné au montage sur des véhicules, de préférence des camions, qui est muni dans sa partie inférieure (9) d'une bavette (2) qui est reliée au garde-boue (1) à l'aide d'un moyen de montage (4),
**caractérisé en ce que**
la bavette (2) présente dans sa partie supérieure (6) au moins deux sections espacées (7, 8) qui constituent une fente qui est adaptée à l'épaisseur de la partie inférieure (9) du garde-boue (1) afin de s'emboîter sur celle-ci,
dans lequel un raccordement du garde-boue (1) et de la bavette (2) est effectué à l'aide de moyens de montage (4) qui traversent la bavette (2) et le garde-boue (1) et sont reçus par un logement de moyens de montage (10) de préférence sur la bavette (2).

2. Garde-boue selon la revendication 1, **caractérisé en ce qu'**un logement de moyens de montage (10) est réalisé sur la section intérieure (8) de la bavette (2) qui s'emboîte sur le garde-boue (1).

3. Garde-boue selon la revendication 1, **caractérisé en ce qu'**un logement de moyens de montage (10) est réalisé dans la partie inférieure du garde-boue (1) sur laquelle s'emboîte la bavette (2).

4. Garde-boue selon l'une quelconque des revendications 1 à 3, **caractérisé en ce que** le moyen de montage (4) est une vis, et le logement de moyens de montage (10) est un élément de matière plastique dans lequel la vis (4) peut être vissée.

5. Garde-boue selon la revendication 4, **caractérisé en ce que** l'élément de matière plastique (10) présente un alésage (11) qui présente un diamètre inférieur au diamètre extérieur de la vis (4).

6. Garde-boue selon la revendication 4 ou 5, **caractérisé en ce que** l'élément de matière plastique (10) présente une forme conique, l'alésage s'étendant de la base jusqu'à la pointe, de préférence aplatie, sans traverser la pointe.

7. Garde-boue selon l'une quelconque des revendications 4 à 6, **caractérisé en ce que** l'élément de matière plastique (10) présente des nervures de renforcement (14) qui sont orientées radialement vers l'extérieur à partir de celui-ci.

8. Garde-boue selon l'une quelconque des revendications 4 à 7, **caractérisé en ce que** l'élément de matière plastique (10) est réalisé d'un seul tenant avec la bavette (2) ou le garde-boue (1).

9. Garde-boue selon l'une quelconque des revendications 1 à 8, **caractérisé en ce que** les sections espacées (7, 8) de la bavette (2) ou du garde-boue (1) sont réalisées sous forme de languettes opposées.

10. Garde-boue selon l'une quelconque des revendications 1 à 8, **caractérisé en ce que** les sections espacées (7, 8) de la bavette (2) ou du garde-boue (1) s'étendent sur la largeur du garde-boue (1).

11. Garde-boue selon l'une quelconque des revendications 1 à 8, **caractérisé en ce que** la section espacée extérieure (7) de la bavette (2) ou du garde-boue (1) s'étend sur la largeur du garde-boue (1), alors que plusieurs sections intérieures (8) sont réalisées à la manière de languettes sur la face intérieure de la bavette (2) ou du garde-boue (1).

12. Garde-boue selon l'une quelconque des revendications 1 à 11, **caractérisé en ce que** dans la partie inférieure (9) du garde-boue (1), dans la position du logement de moyens de montage (10), des alésages (12) sont prévus pour recevoir des moyens de montage (4).

13. Garde-boue selon l'une quelconque des revendications 1 à 12, **caractérisé en ce que** le garde-boue (1) est dans la partie inférieure (9) muni d'un guidage qui permet de recevoir la bavette (2) dans une certaine position seulement.

14. Garde-boue selon la revendication 13, **caractérisé en ce que** le guidage présente au moins une paroi latérale, une saillie ou un retrait qui coopère avec au moins l'une des sections espacées (7, 8) de la bavette (2) ou du garde-boue (1).
